# EUROPÄISCHE PATENTSCHRIFT

(11) **EP 0 622 287 B1**
(45) Veröffentlichungstag und Bekanntmachung des Hinweises auf die Patenterteilung: **18.12.1996**
(21) Anmeldenummer: 94101345.0
(22) Anmeldetag: 29.01.1994
(51) Int. Cl.: B61D 27/00, B60H 1/00, G01L 13/00

(54) **Vorrichtung zur Druckbegrenzung in schnell fahrenden Schienenfahrzeugen**
Device for pressure limitation in high speed railway vehicles
Dispositif de limitation de la pression dans des véhicules ferroviaires à grande vitesse

(30) Priorität: 30.04.1993 DE 4314262
(43) Veröffentlichungstag der Anmeldung: 02.11.1994
(73) Patentinhaber: KRAPF & LEX NACHF. VERKEHRSTECHNIK GmbH & Co.KG, D-92637 Weiden (DE)
(72) Erfinder: Lex, Ernst, Dipl.-Ing., D-92637 Weiden/Opf. (DE)
(74) Vertreter: Böhme, Volker, Dipl.-Ing.

(56) Entgegenhaltungen:
- EP-A- 0 143 931
- EP-A- 0 315 108
- EP-A- 0 326 044
- EP-A- 0 448 326
- EP-A- 0 579 536
- WO-A-91/07712
- FR-A- 2 406 246
- GB-A- 2 184 619
- PATENT ABSTRACTS OF JAPAN vol. 16, no. 321 (M-1279) 14. Juli 1992 & JP-A-04 090 959 (MITSUBISHI HEAVY IND.) 24. März 1992
- PATENT ABSTRACTS OF JAPAN vol. 11, no. 134 (P-571) 28. April 1987 & JP-A-61 273 612 (KOBE STEEL) 3. Dezember 1986

## Beschreibung

Die Erfindung betrifft eine Vorrichtung zur Druckbegrenzung in schnell fahrenden Schienenfahrzeugen, bei der in einer Zu- oder Abluftöffnung eine Druckschutzklappe vorgesehen ist, die mittels einer Steuereinrichtung öffen- und schließbar ist, die ein Druckmeßgerät und einen Rechner umfaßt und bei Überschreiten eines vorgegebenen Differenzwertes zweier Druckwerte einen Öffnungs- oder Schließbefehl abgibt, gemäß Oberbegriff des Patentanspruchs 1.

Bei schnell fahrenden Fahrzeugen, insbesondere Schienenfahrzeugen, treten bei Tunnelein- bzw. -ausfahrten oder im Begegnungsverkehr außen positive und negative Druckstöße auf, die sich durch Fahrzeugöffnungen wie Lufteinlässe oder -auslässe ins Innere des Fahrzeuges fortsetzen. Wenn der Druckanstieg oder -abfall (Gradient) mehr als 500 Pa/sec beträgt, wird dies von den Fahrzeuginsassen als unangenehm bis schmerzhaft empfunden. Um den Druckanstieg oder -abfall im Fahrzeuginneren zu begrenzen, sind in den Lufteinlässen und Luftauslässen Druckschutzklappen bzw. Druckschutzventile eingebaut, die nach Erhalt eines Schließ- oder Öffnungsbefehls möglichst schnell schließen oder öffnen. Um den Schließ- oder Öffnungsbefehl auszulösen, wird bei durch die Praxis bekannten Vorrichtungen der eingangs genannten Art der Außendruck am Fahrzeug gegen einen vorbestimmten Referenzdruck oder gegen den Innendruck des Fahrzeuges gemessen. Bei Messung einer Druckdifferenz erhält man eine proportionale Ausgangsspannung vom Druckaufnehmer, die dann über die Steuereinrichtung bzw. eine Auswerteinheit bei Erreichen eines definierten Grenzwertes bzw. Überschreiten eines vorgegebenen Differenzwertes den Schließbefehl oder Öffnungsbefehl auslöst. Beide Messungsarten bzw. Vorrichtungen haben entscheidende Nachteile.

Wenn man die Druckdifferenz Außendruck gegen festen Referenzdruck mißt, ergeben sich, abhängig vom normalen barometrischen Außendruck unterschiedliche Druckstoßhöhen, bei denen die Schaltung auslöst. Aufgrund der geometrischen Höhenunterschiede zwischen Hamburg und München ergeben sich erhebliche Schaltpunktverschiebungen. Bei der Messung Außendruck gegen Innendruck erhält man eine sehr ungenaue Messung, da der Innendruck dem Außendruck nacheilt. Wenn im Extremfall der Innendruck dem Außendruck sehr schnell nacheilt, kann es dazu kommen, daß die Druckdifferenz zwischen innen und außen so klein bleibt, daß der Schaltbefehl nicht ausgelöst wird, obwohl der Druckgradient im Fahrzeuginneren erheblich über dem Vorgabewert liegt. Durch Turbulenzen und sonstige Strömungseinflüsse ergeben sich abhängig von der Fahrzeuggeschwindigkeit Fehlmessungen von + 200 Pa bis - 400 Pa.

Es ist auch eine Vorrichtung der eingangs genannten Art bekannt (EP-A-0 315 108), bei der ein an der Meßstelle vorgesehener Druckaufnehmer dem Rechner Druckwerte zuliefert und der Rechner den Druckgradient bestimmt. Eine solche Vorrichtung läßt sich vorsehen, indem eine Meßeinrichtung für den Druckgradienten vorgesehen ist, die einen z.B. piezoelektrischen Druckaufnehmer aufweist, der abhängig vom Absolutdruck eine Spannung abgibt, die zyklisch einer elektronischen Auswerteinheit bzw. dem Rechner zugeführt wird. Der Rechner speichert die Meßwerte zu den Zeitpunkten X,X + 1 und vergleicht diese. Bei ausreichend großem Meßunterschied von X und X + 1 bzw. X + 1 und X + 2 usw. gibt die elektronische Auswerteinheit bzw. der Rechner einen elektrischen Schließ- oder Öffnungsbefehl für die Druckschutzklappe ab.

Eine Aufgabe der Erfindung ist es daher, eine Vorrichtung der eingangs genannten Art zu schaffen, die sowohl den auslösenden Druck-Differenzwert aus zwei gemessenen Druckwerten ermittelt als auch unabhängig von dem Nacheilen des Innendrucks hinter dem Außendruck ist. Die erfindungsgemäße Vorrichtung ist, diese Aufgabe lösend, dadurch gekennzeichnet, daß an der Meßstelle Aufnahmeenden von unterschiedlich langen Druckleitungen vorgesehen sind, die anderenends an zwei Eingänge eines Differenzdruckaufnehmers angeschlossen sind, der eine Druckänderung bei der Meßstelle an seinen beiden Eingängen zu verschiedenen Zeitpunkten feststellt, und der Druckgradient jeweils durch die gleichzeitig an den beiden Eingängen festgestellten Druckwerte bestimmt ist.

Es also eine Druckbegrenzung im Inneren von Fahrzeugen, insbesondere von schnell fahrenden Schienenfahrzeugen, mit Druckschutzklappen in Zu- und Abluftöffnungen vorgesehen, die abhängig von den Druckgradienten, der im Innenraum des Fahrzeuges oder an dessen Außenwand gemessen wird, geschlossen oder geöffnet werden. Für das Wohlbefinden von Fahrzeuginsassen ist nämlich in einem bestimmten Druckbereich nicht der Druck, sondern der Druckgradient (Pa/sec) entscheidend, wobei 200 Pa/sec noch als nicht schmerzhaft empfunden werden. Die Vorrichtung wertet nicht eine Druckdifferenz zwischen Innen- und Außendruck oder zwischen Außendruck und Referenzdruck aus, sondern tatsächlich den Druckgradienten, wobei sie nur am Außenfahrzeug oder nur im Innenfahrzeug mißt.

Bei der Erfindung ist eine Meßeinrichtung für den Druckgradienten vorgesehen, die einen z.B. piezoelektrischen Differenzdruckaufnehmer aufweist, der abhängig vom Differenzdruck z.B. eine Spannung abgibt bzw. einen Stromkreis öffnet oder schließt. Dabei entsteht der Differenzdruck dadurch, daß die Meßstellen der A- und B-Seite des Differenzdruckaufnehmers an der gleichen Stelle sitzen, jedoch mit unterschiedlich langen verbindenden Druckleitungen verbunden sind. Es kommen Druckänderungen abhängig vom Unterschied der Leitungslängen an der A- oder B-Seite früher bzw. später an und es stellt sich dadurch ein Differenzdruck ein, der dem Druckgradienten entspricht.

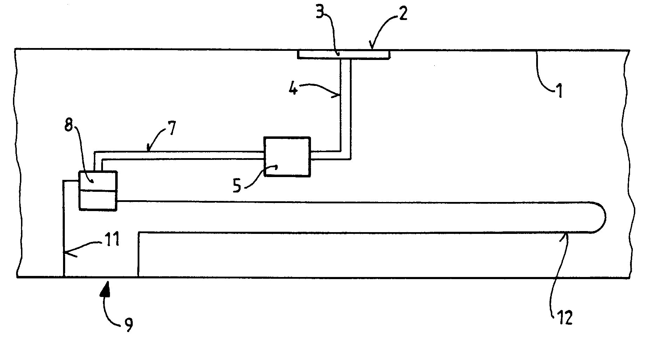

In der Zeichnung ist eine bevorzugte Ausführungsform der Erfindung dargestellt und zwar schematisch eine Vorrichtung zur Druckbegrenzung in schnell fahrenden Schienenfahrzeugen.

Bei der Vorrichtung gemäß Zeichnung ist ein Gehäuse 1 eines Schienenfahrzeuges vorgesehen, das eine Zu- oder Abluftöffnung 2 aufweist, in der eine Druckschutzklappe 3 vorgesehen ist, die man auch als Druckschutzventil bezeichnen kann und die mit einer nicht gezeigten, an sich bekannten Betätigungseinrichtung geöffnet und geschlossen wird. Dieser Betätigungseinrichtung werden über elektrische Steuerleitungen 4 als elektrische Signale ausgebildete Öffnungs- und Schließbefehle zugeführt, die von einem Rechner 5 bzw. einer Auswerteeinheit abgegeben werden. Dem Rechner 5 werden über elektrische Leitungen 7 Druckmeßwerte von nur einem Druckmeßgerät 8 her zugeführt, das jeweils einer bestimmte Meßstelle 9 zugeordnet ist. Es ist das Druckmeßgerät 8 ein Differenzdruckaufnehmer, der über zwei verschieden lange Druckleitungen 11, 12 mit der Meßstelle 9 verbunden ist.

Gemäß Zeichnung wird der geeignete Differenzdrucknehmer 8 auf beiden Seiten mit der Meßstelle 9 an der Außenseite oder der Innenseite des Fahrzeuges über eine der beiden Druckleitungen 11, 12 verbunden. Die Druckleitungen haben unterschiedliche Längen. Die eine Druckleitung 11 des Differenzdruckaufnehmers 8 sollte möglichst kurz, z.B. 0,5 - 1 mtr, die andere ca. 20 mtr. oder länger sein. Druckänderungen, die an der Meßstelle festgestellt werden, setzen sich in den Druckleitungen 11, 12 mit Schallgeschwindigkeit fort. Nachdem die Druckleitungen unterschiedlich lang sind, trifft eine Druckänderung über die längere Druckleitung erst später am Differenzdruckaufnehmer ein und es ergibt sich ein Differenzdruck zwischen der A- und der B-Seite des Differenzdruckaufnehmers, der dem Druckgradienten entspricht. Durch die Leitungslänge und die variable Festlegung der Schaltpunkte kann die Steilheit des Druckgradienten, die zur Schaltauslösung führt, variiert werden.

## Patentansprüche

1. Vorrichtung zur Druckbegrenzung in schnell fahrenden Schienenfahrzeugen,
bei der in einer Zu- oder Abluftöffnung (2) eine Druckschutzklappe (3) vorgesehen ist, die mittels einer Steuereinrichtung öffen- und schließbar ist, die ein Druckmeßgerät (8) und einen Rechner (5) umfaßt und bei Überschreiten eines vorgegebenen Differenzwertes zweier Druckwerte einen Öffnungs- oder Schließbefehl abgibt, und
bei der der den Öffnungs- oder Schließbefehl auslösende Differenzwert ein gemessener (8) Druckgradient ist, der die Differenz zweier bezüglich derselben Meßstelle (9) des Schienenfahrzeugs zu verschiedenen Zeiten gemessener Druckwerte ist,
**dadurch gekennzeichnet,**
daß an der Meßstelle (9) Aufnahmeenden von unterschiedlich langen Druckleitungen (11, 12) vorgesehen sind, die anderenends an zwei Eingänge eines Differenzdruckaufnehmers (8) angeschlossen sind, der eine Druckänderung bei der Meßstelle an seinen beiden Eingängen zu verschiedenen Zeitpunkten feststellt, und der Druckgradient jeweils durch die gleichzeitig an den beiden Eingängen festgestellten Druckwerte bestimmt ist.

## Claims

1. A device for pressure limitation in high-speed rail vehicles, wherein a pressure protection valve (3) is provided in an air inlet or outlet opening (2) and is openable and closable by means of a control device comprising a pressure meter (8) and a computer (5) and giving an opening or closing command when a predetermined differential value of two pressure values is exceeded, and wherein the differential value triggering the opening or closing command is a measured (8) pressure gradient being the difference between two pressure values measured at different times at the same measuring point (9) of the rail vehicle, characterised in that sensing ends of pressure lines (11, 12) of different lengths are provided at the measuring point (9), the pressure lines (11, 12) being connected at the other end to two inputs of a differential pressure sensor (8) which detects a pressure change at the measuring point at its two inputs at different times, and the pressure gradient is in each case determined by the pressure values detected simultaneously at the two inputs.

## Revendications

1. Dispositif pour limiter la pression dans des véhicules ferroviaires à grande vitesse, dans lequel est prévu, dans une ouverture d'amenée ou d'évacuation d'air (2), un clapet protecteur de pression (3) susceptible d'être ouvert ou fermé au moyen d'un dispositif de commande, lequel comporte un dispositif de mesure de pression (8) et un calculateur (5), et lequel donne, lorsqu'une valeur différentielle prédéterminée de deux valeurs de pression est dépassée, un ordre d'ouverture ou de fermeture, et dans lequel la valeur différentielle déclenchant l'ordre d'ouverture ou de fermeture est un gradient de pression mesuré (8) qui est la différence entre deux valeurs de pression mesurées au même emplacement de mesure (9) du véhicule ferroviaire à différents instants, caractérisé en ce qu'il est prévu à l'emplacement de mesure (9) des extrémités de captage de conduites de pression (11, 12) de différentes longueurs, qui sont raccordées du côté de l'autre extrémité à deux entrées d'un capteur de pression différentielle (8) qui détecte une modification en pression au niveau de l'emplacement de mesure a ses deux entrées à différents instants, et en ce que le gradient de pression est déterminé respectivement par les valeurs de pression détectées simultanément aux deux entrées.
